(19) Europäisches Patentamt
European Patent Office
Office européen des brevets

(11) **EP 2 054 633 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
*F15B 15/28* (2006.01)   *G01B 7/14* (2006.01)

(21) Anmeldenummer: **07801711.8**

(22) Anmeldetag: **16.08.2007**

(86) Internationale Anmeldenummer:
**PCT/EP2007/007258**

(87) Internationale Veröffentlichungsnummer:
**WO 2008/019862 (21.02.2008 Gazette 2008/08)**

(54) **VERFAHREN UND VORRICHTUNG ZUM BESTIMMEN DER POSITION EINES KOLBENS IN EINEM ZYLINDER**

DISTANCE MEASURING DEVICE, METHOD FOR DETERMINING A DISTANCE, AND SUITABLE REFLECTIVE MEMBER

DISPOSITIF DE MESURE DE DISTANCE, PROCÉDÉ POUR DÉTERMINER UNE DISTANCE ET ÉLÉMENT RÉFLÉCHISSANT ADAPTÉ

(84) Benannte Vertragsstaaten:
**DE FR GB SE**

(30) Priorität: **17.08.2006 DE 102006038469**

(43) Veröffentlichungstag der Anmeldung:
**06.05.2009 Patentblatt 2009/19**

(73) Patentinhaber: **Astyx GmbH**
**85521 Ottobrunn (DE)**

(72) Erfinder: **TRUMMER, Guenther**
**91083 Beiersdorf (DE)**

(74) Vertreter: **Kunz, Herbert et al**
**Fish & Richardson P.C.**
**Highlight Business Towers**
**Mies-van-der-Rohe-Straße 8**
**80807 München (DE)**

(56) Entgegenhaltungen:
**WO-A2-03/069269     JP-A- H1 086 945**
**US-A- 4 901 628**

• **ANONYMOUS: "Microwave piston position detection", RESEARCH DISCLOSURE, MASON PUBLICATIONS, HAMPSHIRE, GB, vol. 279, no. 24, 1 July 1987 (1987-07-01) , XP007111721, ISSN: 0374-4353**

**Beschreibung**

Die vorliegende Erfindung betrifft eine Abstandsmessvorrichtung nach dem Oberbegriff des Anspruchs 1 sowie ein Verfahren zur Bestimmung eines Abstands und ein geeigneter Reflexionskörper.

Unter anderem werden herkömmliche Abstandsmessvorrichtungen beispielsweise zur Detektion der Kolbenposition von fluidischen Linearantrieben bzw. pneumatische und hydraulische Zylinder eingesetzt. Die Kolbenpositionserfassung an Zylindern kann sowohl diskret, d. h. an diskreten Stellen, als auch kontinuierlich, d. h. ständig während des Betriebs, erfolgen.

Eine diskrete Kolbenpositionsbestimmung wird in der Regel benötigt, um die Ausführung bzw. Beendigung einer Kolbenbewegung an eine Ablaufsteuerung (z. B. SPS) zurückzumelden, um somit beispielsweise den nächsten Ablaufschritt einleiten zu können.

Hierzu werden überwiegend magnetfeldempfindliche Sensoren bzw. Sensoreinrichtungen verwendet, welche das Magnetfeld eines Permanentmagneten, der sich an dem Zylinderkolben befindet, detektieren. Die dabei eingesetzten Sensoren werden extern an das Zylinderrohr des Kolbenzylinders montiert. Bewegt sich der Kolben in den Erfassungsbereich eines solchen Sensors, so erkennt dieser die Anwesenheit des Zylinderkolbens, durch das Zylinderrohr hindurch. Hierfür ist überwiegend die Verwendung von nichtferromagnetischen Werkstoffen erforderlich und beschränkt somit die konstruktiven Eigenschaften bzw. Anwendungen des Antriebes.

Soll hingegen eine andere Position des Kolbens detektiert werden, so muss der Sensor entsprechend mechanisch justiert werden. Für jede zusätzlich zu erfassende Position muss folglich ein weiterer Sensor montiert werden, und zwar mit den damit verbundenen zusätzlichen Material-, Montage-, Justage- und Installationskosten.

Dies geschieht in der Regel vor Ort beim Kunden. Oft ist dabei der Zylinder bereits in eine schwer zugängliche Maschine eingebaut und die Einstellung der Schaltabstände durch mechanische Verschieben der extern montierten Magnetschalter ist nicht mehr möglich.

Ferner wird für diese extern angebauten Sensoren zusätzlicher Einbauraum benötigt. Damit die Zugänglichkeit und Robustheit des Sensors gewährleistet werden kann, ist häufig zusätzlicher konstruktiver Aufwand erforderlich.

Diese Art von Sensoren sind überwiegend als magnetfeldempfindliche Sensoren ausgeführt und sind als Reed-Schalter, magnetoresistive (MR), giant magnetoresistive (GMR), Hall-Schalter oder magnetinduktive Näherungsschalter bekannt.

Durch die Detektion des Magnetfeldes ist eine aufwendige Abstimmung des Magneten auf die Sensoreinrichtung erforderlich. Zudem werden durch dieses Messprinzip die möglichen Anwendungen durch störende statische und dynamische Magnetfelder (EMV, Feld eines nahen Zylinders) sowie das Temperaturverhalten des Sensors beschränkt.

Zur kontinuierlichen Kolbenpositionsmessung werden gewöhnlich Meßsysteme verwendet, die potentiometrisch, nach dem LVDT -Prinzip (Linear Variable Differential Transformer) magnetostriktiv oder nach dem Ultraschall-Prinzip arbeiten. Die Kolbenposition wird bei diesen Systemen kontinuierlich und überwiegend als analoges Spannungssignal ausgegeben. Sensoren nach dem LVDT-Prinzip benötigen beim Einschalten immer eine Referenzfahrt. Magnetostriktive Sensoren werden entweder extern an den Zylinder oder in eine hohle Kolbenstange montiert. Beide Montagemöglichkeiten bedeuten einen erheblichen Mehraufwand, sind störanfällig bzw. schwächen im Falle der hohlen Kolbenstange die Stabilität des Antriebs. Ultraschallsensoren sind für die Wegmessung in Pneumatik- und Hydraulikzylindern nur bedingt geeignet, da die Messgenauigkeit sich mit dem Zylinderdruck ändert. Als Ergänzung zu diesen Systemen sind auch inkrementale Wegmessungen bekannt. Diese Systeme werden beispielsweise durch die Kodierung der Kolbenstange realisiert und können somit nur zur relativen Wegmessung verwendet werden.

Sowohl die kontinuierliche als auch die diskrete Kolbenpositionsbestimmung können nicht bzw. nur mit erheblichem konstruktiven Aufwand und den dadurch verbundenen hohen Kosten in einen Zylinder integriert werden. Der erhebliche konstruktive Aufwand begründet sich dadurch, dass alle beschriebenen gängigen Sensorprinzipien auf die entsprechende Zylinderlänge angepasst werden müssen, da sie einen zu kurzen Erfassungsbereich besitzen.

Das ideale Wegmesssystem zur Bestimmung der Kolbenposition in Pneumatik- und Hydraulikzylindern besitzt folgende Eigenschaften, und zwar eine kontinuierliche, absolute Wegmessung mit einer Genauigkeit von 100 μm zum Positionieren des Kolbens, eine vollständige Integration des Sensors mit Auswerteelektronik in den Deckel des Zylinders, Schaltabstände sollten extern über eine elektronische Schnittstelle einstellbar sein (Teach-in Fähigkeit), einen universell einsetzbaren Sensor, unabhängig von der Zylinderlänge, Messergebnisse unabhängig von Druck, Öl und Feuchtigkeit im Zylinder, und/oder zuverlässige Messergebnisse z. B. bis 10 bar Druck und 6m/sec Kolbengeschwindigkeit im Pneumatikzylinder Eine Mikrowellensensorik zur Bestimmung der Kolbenposition in Pneumatik- und Hydraulikzylindern ist in der US4901628 offenart. Ein weiterer Stand der Technik ist in der deutschen Patentanmeldung Nr. 102 05 904.7 beschrieben.

Die in der Patentanmeldung beschriebene Messanordnung besitzt für Zylinder mit großem Durchmesser (>50 mm) in der Praxis nachfolgende Probleme:

Der Kunststoffring für den Kolbenanschlag und die Antennenhalterung wird erstens sehr groß. Diese Kunststoffteile sind nur bis zu einem Durchmesser von max. 60 mm als Stangenware erhältlich. Für größere Durchmesser sind teure Spezialanfertigungen erforderlich. Zudem nimmt Kunststoff im Laufe der Zeit Wasser auf bzw. gibt je nach Einsatzbedingungen Wasser ab und verändert dadurch die Messbedingungen. Die Messergebnisse werden dann ungenau und entsprechen nicht mehr der Spezifikation.

Eine klassische Endlagendämpfung z. B. des Pneumatikkolbens lässt sich zweitens durch den bewegten Bremsring aus Kunststoff nur unter Verlust von Messgenauigkeit erreichen.

Weitere Nachteile der in der Patentanmeldung Nr. 102 05 904.7 beschriebenen Messanordnung sind; dass die herkömmlichen Kolben in Pneumatikzylinder relativ dünn sind und in der Regel mittig einen Magnetring besitzen, um den Betrieb mit extern montierten Reed Schaltern zu ermöglichen. Diese Kolben bilden für eine elektromagnetische Welle keinen idealen Reflexionskörper. Ein Teil der elektromagnetischen Welle gelangt über den Kolben hinweg in den dahinter liegenden Funktionsraum des Zylinders, kommt zeitverzögert zurück und überlagert sich dem Nutzsignal. Dadurch verschlechtert sich die Messgenauigkeit erheblich. Des weiteren existieren Kolben die komplett in Kunststoff realisiert sind. Diese Kolben stellen für die elektromagnetische Welle überhaupt keinen Reflexionskörper dar. Das in obiger Patentanmeldung beschriebene Verfahren funktioniert dann überhaupt nicht mehr.

Ferner hat ein Kolbenanschlag im Deckel aus Kunststoff den Nachteil, dass durch häufiges Auftreffen des Kolbens sich der Kunststoff setzt und sich damit die physikalischen Bedingungen im Funktionsraum des Deckels für den Hochfrequenzsensor ändern. Die Messgenauigkeit verschlechtert sich außerdem.

Zusätzlich ist es bei kleineren Zylinderdurchmessern sehr schwierig, die diskrete Elektronik in den Zylinderdeckel zu integrieren. Ein Teil der Elektronik muss dann aufwendig extern, z. B. auf der Zylinderwand untergebracht werden.

Aufgabe der vorliegenden Erfindung ist es somit, eine Abstandsmessvorrichtung und ein Verfahren zur Bestimmung des Abstands zu schaffen, welche bzw. welches die oben aufgeführten Nachteile überwindet und eine kontinuierliche und somit diskretisierbare Abstandsbestimmung, eine einfache Handhabung und vielseitige Einsatzmöglichkeiten erlaubt.

Diese Aufgabe wird vorrichtungstechnisch mit den Merkmalen des Anspruchs 1 und verfahrenstechnisch mit den Merkmalen des Anspruchs 29 gelöst. Anmeldungsgemäß wird anhand der geometrischen Ausgestaltung des Reflexionskörpers erreicht, dass die Koppelsonde beim Ausschlag des Reflexionskörpers berührungslos im Innern des Reflexionskörpers, insbesondere in den Kragen, eintaucht. Ein Verstellen der Position der Koppelsonde wird verhindert und die Messgenauigkeit beibehalten. Durch Vorhandensein des Kragens mit einer Kunststofflamelle wird erreicht, dass der Abbremsvorgang des Reflexionskörpers mit einem Kunststoffring bewerkstelligt wird, der die Abstandsmessung nicht beeinflusst, da der Kunststoffring nicht innerhalb des Reflexionskörpers vorliegt.

Anmeldungsgemäß wird ferner eine Leitungsstruktur bereitgestellt, die einen Einspeiseblock mit einem Einspeisungsbereich aufweist, der einen HF-Transceiver über einen Wellenleiter mit dielektrischen Haltesystemen mit der Koppelsonde verbindet. Mit dieser anmeldungsgemäßen Anordnung ist eine vollständige Integration der Koppelsonde mit der Auswerteelektronik in dem Deckel des Zylinders möglich. Zusätzliche extern zu montierende Teile sind somit nicht notwendig. Die entsprechenden Schaltabstände können über eine elektronische Schnittstelle extern vorzugsweise über die Auswerteelektronik eingestellt werden. Grundsätzlich ist die anmeldungsgemäße Abstandsmessvorrichtung unabhängig von der Zylinderlänge universell einsetzbar. Es hat sich darüber hinaus gezeigt, dass die Messergebnisse unabhängig vom Druck, Öl und der Luftfeuchtigkeit im Zylinder zuverlässig stimmen. Anmeldungsgemäß wird eine Abstandsmessvorrichtung und ein Verfahren zur Bestimmung eines Abstands zur Verfügung gestellt, wobei die Sensoreinrichtung ein Hochfrequenz-Einspeisesystem aufweist, das dazu dient, durch Abstrahlen und Empfangen von Wellen, einen bestimmten Abstand beispielsweise in einer Leitungsstruktur (Leitungsstruktur ist z.B. der Innenraum des Pneumatikzylinders = Rundhohlleiter) auszumessen, indem beispielsweise das Einspeisesystem in die Leitungsstruktur integriert wird. Aufgrund dieser Integration des Einspeisesystems wird erreicht, dass die Abstandsmessvorrichtung klein baut und nahezu keine bzw. geringe Umbaumaßnahmen erforderlich macht. Der gesamte Aufbau der anmeldungsgemäßen Abstandsvorrichtung kann somit ein sauberes, glattes Design aufgrund des Wegfalls einer Montagemöglichkeit für externe Sensoreinrichtungen aufweisen, bzw. beeinflusst die äußere Erscheinung nicht. Mit der anmeldungsgemäßen Abstandsmessvorrichtung wird eine Installationsersparnis erreicht, da der vorgefertigte Zylinder lediglich ein Anschlusskabel zur Ansteuerung und Datenerfassung aufweist. Gemäß dem anmeldungsgemäßen Verfahren wird die Länge der Leitungsstruktur bis zu einem Kurzschluss, (z. B. Kolben als Reflexionskörper beim Pneumatik- und Hydraulikzylinder) der auch verschiebbar ist, gemessen. Das entsprechend dem anmeldungsgemäßen Verfahren bereitgestellte Sendesignal wird in eine Leitungsstruktur eingespeist und vorzugsweise durch einen Kurzschluss (= Zylinderkolben) reflektiert. Dadurch wird die Messung des Abstandes zwischen dem von der Koppelsonde definierten Einspeisepunkt und dem Kurzschluss der Leitungsstruktur durchgeführt. Der zu messende Abstand erfolgt hierbei durch Messung der Phasendifferenz zwischen Sende- und Empfangssignal.

Konkret sieht die Anordnung wie folgt aus:

Das RF-Einspeisesystem besteht aus einem koaxialen Monopol-Anregungssystem. Durch Einspeisung einer transversal elektromagnetischen Welle (TEM-Welle) im koaxialen Eingangsbereich (3) wird durch das Monopolsystem eine Rundhohlleiterwelle mit dem charakteristischen E-Feldtyp der E01-Welle angeregt. Diese Welle breitet sich innerhalb des Laufzylinders in axialer Richtung aus. Trifft diese Welle auf einen Reflexionskörper (im Pneumatik- und Hydraulikzylinder den Kolben), wird die Welle reflektiert und über die Anregungssektion (Monopol) in das koaxiale Leitungssystem konvertiert und weitergeführt. Die Monopoleinspeisung besteht aus einer 3-stufigen koaxialen Transformationsstufe (2) mit einem dielektrischen Haltesystem (1), vorzugsweise aus PPS Gf 40 Material, zur Positionierungs- und Druckstabilisierung.

Bei Zylindern mit großem Durchmesser kann das dielektrische Haltesystem nur partiell in Form von dielektrischen Stützen ausgeführt werden. Der Kolbenendanschlag ist durch eine Grundplatte mit aufgesetztem Kragen zur Ausbidung eines becherförmigen Teils (3) aus Aluminium realisiert, welches als Endstück am Kolben montiert wird. Dabei wird der Becher so ausgeführt, dass die Antenne beim Anschlag berührungslos im Inneren des Bechers eintaucht. Auf der Stirnseite des Bechers ist eine Kunststofflamelle (4) untergebracht um einen sanften Anschlag zu ermöglichen. Dieser Becher dient zusätzlich als Reflexionskörper für die gesendete elektromagnetische Welle. Um ideale Reflexionsbedingungen zu erreichen wurden am Umfang des Reflexionskörpers so genannte "Corrugations" (5) realisiert. Dabei handelt es sich um eingefräste Rillen, die für die elektromagnetische Welle einen Kurzschluss darstellen. Je nach Anzahl der Rillen kann damit ein nahezu perfekter Kurzschluss realisiert werden. In der Praxis genügen 2 Rillen. Die Tiefe der Rillen entsprechen einem Viertel der Wellenlänge der verwendeten Sendefrequenz der elektromagnetischen Welle. Eine weitere vorteilhafte Ausführung des Reflexionskörpers besteht darin, dass er so ausgestaltet werden kann um die Funktion einer Endlagendämpfung zu realisieren. Ohne Endlagendämpfung würde der Kolben ungebremst auf den Deckel auftreffen. Dies führt zu Erschütterungen und kann Beschädigungen am Antriebssystem verursachen. Die klassische Endlagendämpfung wird dadurch realisiert, dass die Kolbenstange über den Kolben in Richtung Sensor hinausragt und mit einem konisch zulaufenden Kunststoffaussatz versehen wird. Das Gegenstück im Enddeckel bildet ein Kunststoffring dessen Innendurchmesser gerade so groß ist, dass die Kolbenstange mit konisch zulaufendem Kunststoffaufsatz eintauchen kann. Entspricht der Innendurchmesser des Kunststoffrings jenem des Außendurchmessers des konischen Kolbenstangenaufsatzes, dann wird der Kolben abgebremst. Um dem Zylinder nach einem Abbremsvorgang eine sanfte Anfahrt zu ermöglichen wird der Kunststoffring im Deckel so gelagert, dass er sich z.B. einige Millimeter axial bewegen kann. Fährt der Kolben nach einem Abbremsvorgang wieder an, dann nimmt er den Kunststoffring bis zu dessen Anschlag mit. Durch die kinetische Energie, die der Kolben dann besitzt, kommt es zu einem sanften Ruck und der Kunststoffring löst sich vom konischen Kunststoffaufsatz der Kolbenstange. Unterstützt wird der Abbremsvorgang durch einen mittels Schraube einstellbaren Luftaustausch zwischen Deckel- und Zylinderraum. Der Nachteil für das HF Wegmesssystem besteht darin, dass die Bewegung des Kunststoffrings im Deckelraum die physikalischen Verhältnisse für den Sensor ändert und sich dadurch die Messgenauigkeit wesentlich verschlechtert. Grundsätzlich lässt sich die kalssische Endlagendämpfung auch bei der vorgeschlagenen Konfiguration realisieren. Der Kunststoffring sitzt im Deckel und die konische Verlängerung der Kolbenstange wird am Reflexionskörper realisiert. Der Vorteil dieser Lösung besteht darin, dass jetzt die Bewegung des Kunststoffrings durch den Becher maskiert wird, d.h. die Sensorsignale durch das Eintauchen der Antenne in den Becher durch die Bewegung des Kunststoffrings nicht mehr gestört werden. Eine ebenso vorteilhafte Ausführung wird erreicht, wenn das Wirkschema umgedreht wird. Der bewegliche Kunststoffring wird jetzt auf der Außenfläche des Bechers montiert und die Deckeleintauchfläche konisch ausgeführt und kunststoffbeschichtet. Die Bewegung des Rings auf dem Reflexionskörper beeinflusst die elektromagnetische Welle nicht, da sich der Kunststoffring nicht mehr im Nahbereich der Antenne befindet. Ebenso ist der pneumatische Druckausgleich vorteilhaft im Deckel realisiert.

Sämtliche Kunststoffteile in unmittelbarer Nähe der Monopolantenne müssen in einem Kunststoffmaterial mit geringer Wasseraufnahme wie z. B. PPS Gf 40 ausgeführt werden.

Der gesamte Pneumatikzylinder zwischen Kolbenstange und rückwärtigem Deckel wird bei dem vorgestellten Verfahren z. B. als Rundhohlleiter betrachtet. Entsprechend den geometrischen Abmessungen des Zylinders wird die Sendefrequenz des Sensors so gewählt, dass eine monomodige Ausbreitung der elektromagnetischen Welle (im Beispiel im E01-Mode) möglich ist. Die Anregung von Hohlleitermoden niedrigerer Ordnung wird durch die Geometrie der Einspeisung verhindert. Die Anregung der elektromagnetischen Welle im Zylinder erfolgt z.B. über einen Monopol (=Antenne) in der vorgestellten Art und Weise. Entsprechend dem Reflektometerprinzip breitet sich die Welle in dem Rundhohlleiter (=Pneumatikzylinder) aus und wird am Kolben (=Kurzschluss) reflektiert. Um die Entfernung zwischen Kolben und Sensor kontinuierlich messen zu können, muss das Sendesignal moduliert werden. Dies kann in Form einer Frequenzmodulation oder durch Auswerten der Phasendifferenz zwischen gesendetem und empfangenem Signal bei mehreren Frequenzen erfolgen. Die Sendefrequenz liegt in der Regel zwischen 100 MHz und 25 GHz.

Weitere vorteilhafte Ausgestaltungen der Erfindung sind Gegenstand der Unteransprüche.

Die Verwendung eines dielektrischen Sekundärrings dient als Anschlagsicherung des sich bewegenden Reflexionskörpers und wurde bei der elektromagnetischen Auslegung des Einspeisesystems berücksichtigt.

Es hat sich als besonders vorteilhaft herausgestellt, wenn die Leitungsstruktur ein Rundhohlleiter, vorzugsweise ein Zylinder mit Kolben, als Reflexionskörper ist. Ein derartiger Rundhohlleiter kann beispielsweise ein Pneumatikzylinder oder ein Hydraulikzylinder sein. Die bislang bestehenden Nachteile sind somit insbesondere für diese Anwendungen ausgeräumt.

Durch das Vorhandensein von Bohrungen in dem Einspeisungsblock, in die das Haltesystem, die Koppelsonde und der koaxiale Einspeisungsbereich einbringbar sind, ist eine einfache Montage gewährleistet und die gesamte Abstandsmessvorrichtung kann nahezu beliebig in bestehende Leitungsstrukturen integriert werden.

Gemäß Anspruch 14 hat es sich als vorteilhaft herausgestellt, wenn die Koppelsonde als Monopol-Anregungssytem ausgelegt ist und die Einspeisung der elektromagnetischen Welle koaxial erfolgt, so dass eine Rundhohlleiterwelle eingespeist werden kann, und über eine mehrstufig koaxiale Transformationsstufe auf den Monopol konvertiert. Über die mehrstufige koaxiale Transformationsstufe, welche eine plane Grundfläche aufweisen kann, auf der mittig ein elektrisch leitender Zylinder vorgesehen ist, und an den sich ein elektrisch leitender Stift als Innenleiter der koaxialen Einspeisung anschließt, wird erreicht, dass die gesamte Einspeisung auf einfache Weise erfolgt.

Das Haltesystem besteht aus Dielektrikum, z. B. Lexan, und dient zur Positionierung der Koppelsonde im Zylinder. Ferner sorgt es für die nötige mechanische Stabilität bei Druckbelastung (z. B. 10 bar im Pneumatikzylinder). In der Serienfertigung lässt sich der Einspeiseblock besonders kostengünstig realisieren, indem das Monopol-Anregungssystem in den Zylinderdeckel eingelegt wird und das dielektrische Haltesystem mittels Kunststoffspritzverfahren dieses mit dem Zylinderdeckel fest verbindet.

Gemäß Anspruch 18 wird eine elektromagnetische Welle im Hochfrequenzbereich zwischen 100 MHz bis 25 GHz eingespeist. In der Abhängigkeit von den Dimensionen bzw. Ausmessungen des als Leitungsstruktur verwendeten Zylinders und Wellenmodus wird eine geeignete Frequenz gewählt, die über der unteren Grenzfrequenz des verwendeten Wellenmodus liegt.

Vorteilhafte Weiterbildungen sind Gegenstand der weiteren Unteransprüche.

Anhand der nachfolgenden Zeichnungen soll eine Ausgestaltung der anmeldungsgemäßen Abstandsmessvorrichtung dargestellt werden.

Fig. 1      zeigt eine Schnittdarstellung der Abstandsmessvorrichtung in einer eingebauten Leitungsstruktur;

Fig. 2      zeigt perspektivisch eine Explosionsdarstellung der anmeldungsgemäßen Abstandsmessvorrichtung (linke Seite) und der anmeldungsgemäßen Abstandsmessvorrichtung im zusammengebauten Zustand (rechte Seite).

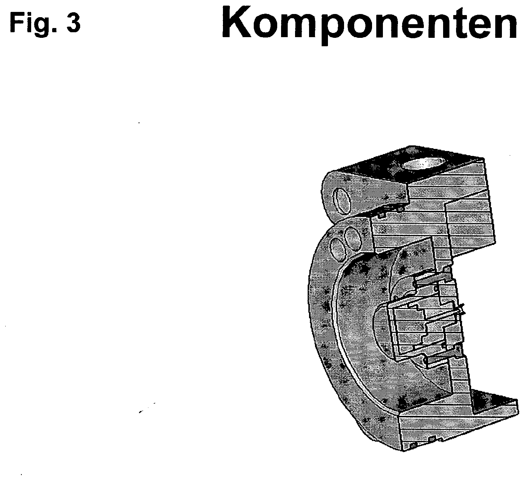

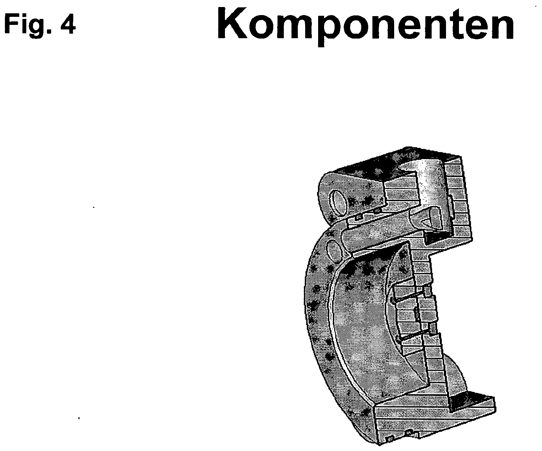

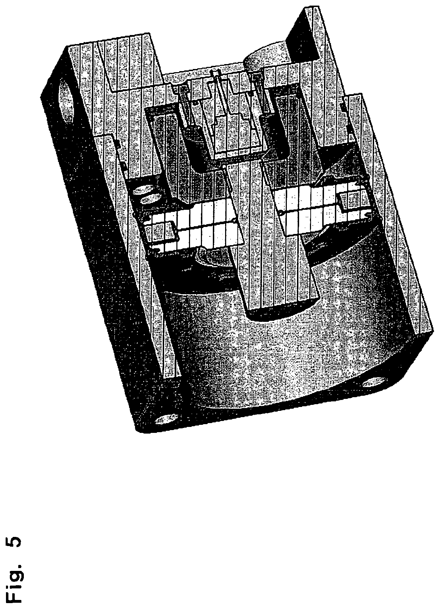

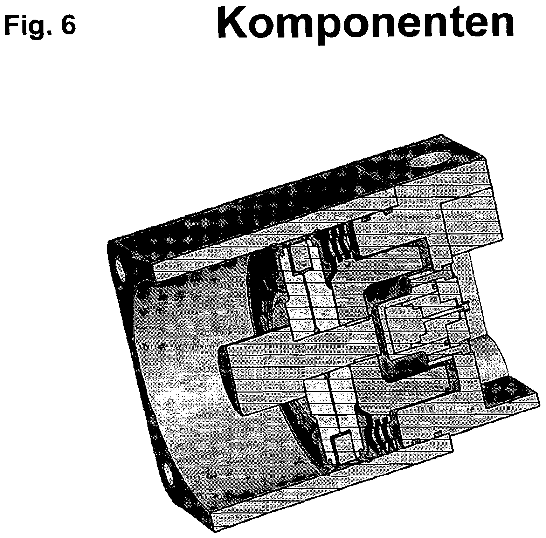

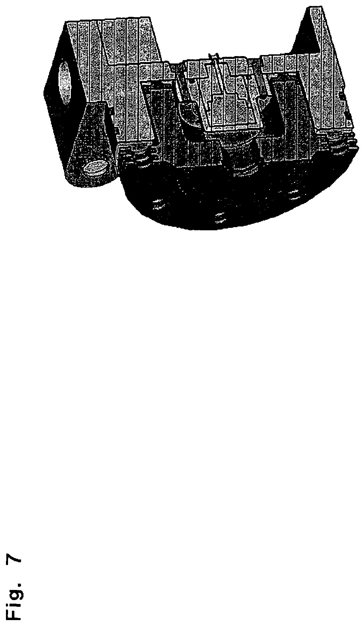

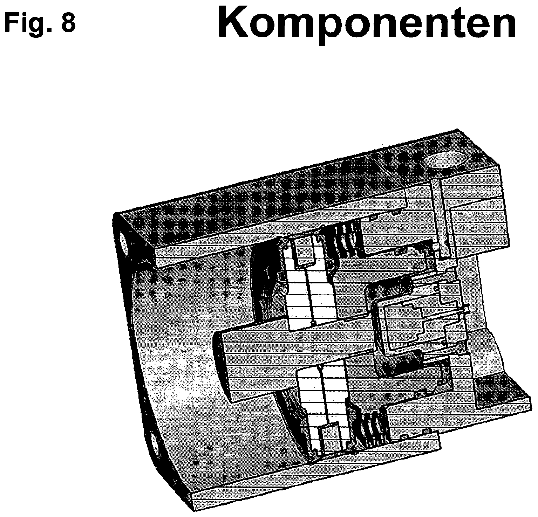

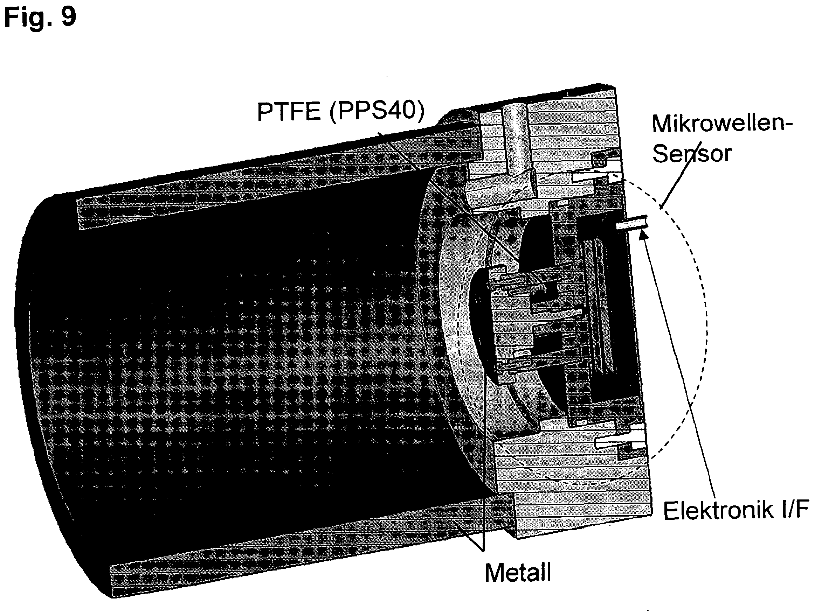

Fig. 3-9      zeigen einzelne Komponentendarstellungen der anmeldungsgemäßen Abstandsmessvorrichtungen.

Fig. 10      zeigt ein Blockschaltbild des Hochfrequenz-Chips.

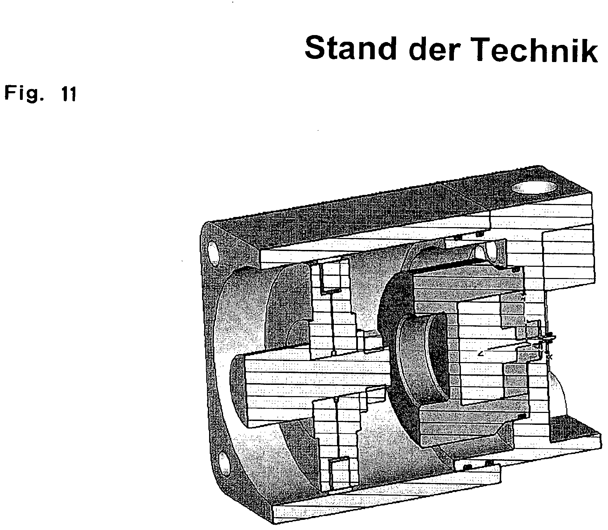

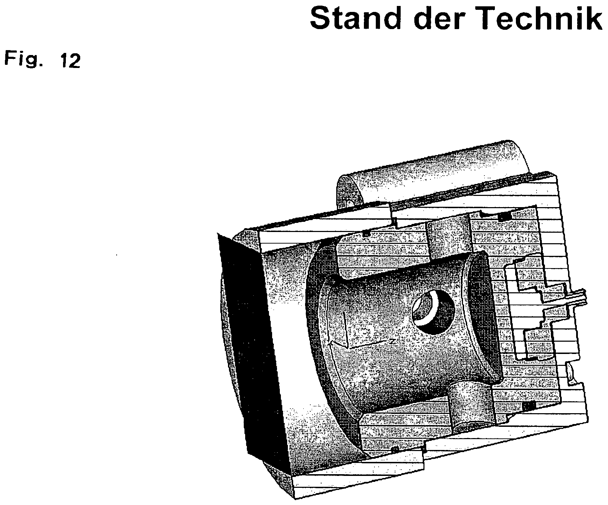

Fig. 11 und 12      zeigen herkömmliche Leitungsstrukturen gemäß dem Stand der Technik.

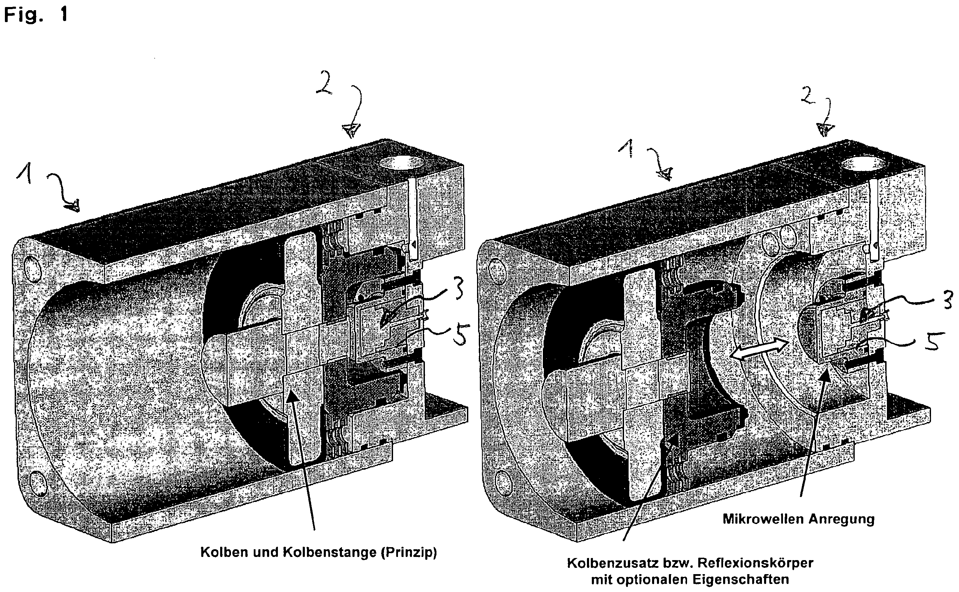

In Fig. 1 ist die anmeldungsgemäße Abstandsmessvorrichtung mit Leitungsstruktur 1 und Einspeiseblock mit Einspeisungsbereich 2 dargestellt, wobei der Einspeisungsbereich eine Koppelsonde 3 über ein dielektrisches Haltesystem 5 mit dem Wellenleiter 7 aufweist. Zusätzlich ist der dielektrische Sekundärring 9 dargestellt, der zum einen als mechanische Anschlagssicherung dient und als sekundäres Anpass- und Abstrahlsystem ausgelegt ist.

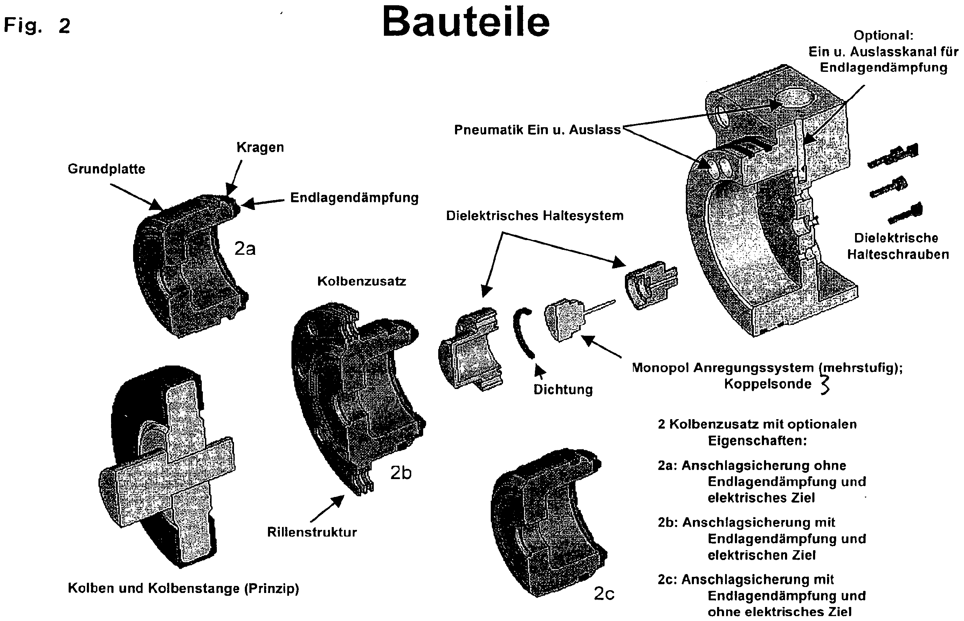

Deutlicher sind die jeweiligen Komponenten der anmeldungsgemäßen Abstandsmessvorrichtung in der Fig. 2 dargestellt, wobei die wesentlichen Komponenten, wie Einspeiseblock mit einem Einspeisungsbereich 2, in Explosionsdarstellung wiedergegeben sind. Deutlich ist ebenso zu erkennen, dass das dielektrische Haltesystem die als Monopol-Anregungssystem ausgestaltete Koppelsonde 3 hält, welche einen Stift enthält, der in einem koaxialen Wellenleiter aufnehmbar ist. Zusätzlich ist der dielektrische Sekundärring 9 dargestellt. Ebenso ist der Reflexionskörper mit aufgesetztem Kragen zur Ausbildung eines becherförmigen Elements dargestellt, dessen Grundplatte vorteilhafterweise eine Rillenstruktur aufweist.

Zum besseren Verständnis soll die Funktionsweise der anmeldungsgemäßen Abstandsmessvorrichtung bzw. des Verfahrens zur Bestimmung des Abstandes klarer erläutert werden.

Das Einspeisesystem besteht aus einem koaxialen Monopol-Anregungssystem. Durch Einspeisung einer transversal elektromagnetischen Welle, d. h. TEM-Welle im koaxialen Einspeisungs- bzw. Eingangsbereich 3 wird durch das Monopolsystem eine Rundhohlleiterwelle mit dem charakteristischen E-Feldtyp der E01-Welle angeregt. Diese Welle breitet sich innerhalb des Laufzylinders in axialer Richtung aus. Trifft diese Welle auf einen Reflexionskörper, d. h. im Pneumatik- und Hydraulikzylinder den Kolben, wird die Welle reflektiert und über die Anregungssektion (Monopol) in das koaxiale Leitungssystem konvertiert und an einen HF-Transceiver (Sende- und Empfangseinheit) weitergeführt. Die Monopoleinspeisung besteht aus einer mehrstufigen koaxialen Transformationsstufe als Koppelsonde 3 mit einem dielektrischen Haltesystem 5, vorzugsweise aus PPS Gf 40 Material, zur Positionierungs- und Druckstabilisierung. Bei Zylindern mit großem Durchmesser kann das dielektrische Haltesystem nur partiell in Form von dielektrischen Stützen ausgeführt werden. Der Kolbenendanschlag ist durch einen becherförmigen Teil 6 z. B. aus Aluminium realisiert, welches als Endstück am Kolben montiert wird. Dabei wird der Becher so ausgeführt, dass die Antenne beim Anschlag berührungslos im Inneren des Bechers eintaucht. Auf der Stirnseite des Bechers ist eine Kunststofflamelle 7 untergebracht um einen sanften Anschlag zu ermöglichen. Dieser Becher dient zusätzlich als Reflexionskörper für die gesendete elektromagnetische Welle. Um ideale Reflexionsbedingungen zu erreichen wurden am Umfang des Reflexionskörpers so genannte "Corregations" 8 realisiert. Dabei handelt es sich um eingefräste Rillen, die für die elektromagnetische Welle einen Kurzschluss darstellen. Je nach Anzahl der Rillen kann damit ein nahezu perfekter Kurzschluss realisiert werden. In der Praxis genügen 2 Rillen. Die Tiefe der Rillen entsprechen ca. einem Viertel der Wellenlänge der verwendeten Sendefrequenz der elektromagnetischen Welle, wenn sich Luft in den Rillen befindet. Die Tiefe der Rillen lässt sich wesentlich verkürzen, wenn diese mit Dielektrikum z. B. Teflon gefüllt werden. In der Praxis wird man dielektrische Ringe einlegen. Eine weitere vorteilhafte Ausführung des Reflexionskörpers besteht darin, dass er so ausgestaltet werden kann, dass man damit die Funktion einer Endlagendämpfung realisieren kann. Ohne Endlagendämpfung würde der Kolben ungebremst auf den Deckel auftreffen. Dies führt zu Erschütterungen und kann Beschädigungen am Antriebssystem verursachen. Die klassische Endlagendämpfung wird dadurch realisiert, dass die Kolbenstange über den Kolben in Richtung Sensor hinausragt und mit einem konisch zulaufenden Kunststoffaussatz versehen wird. Das Gegenstück im Enddeckel bildet ein Kunststoffring dessen Innendurchmesser gerade so groß ist, dass die Kolbenstange mit konisch zulaufendem Kunststoffaufsatz eintauchen kann. Entspricht der Innendurchmesser des Kunststoffrings jenem des Außendurchmessers des konischen Kolbenstangenaufsatzes, dann wird der Kolben abgebremst. Um dem Zylinder nach einem Abbremsvorgang eine sanfte Anfahrt zu ermöglichen, wird der Kunststoffring im Deckel so gelagert, dass er sich z. B. einige Millimeter axial bewegen kann. Fährt der Kolben nach einem Abbremsvorgang wieder an, dann nimmt er den Kunststoffring bis zu dessen Anschlag mit. Durch die kinetische Energie, die der Kolben dann besitzt, kommt es zu einem sanften Ruck und der Kunststoffring löst sich vom konischen Kunststoffaufsatz der Kolbenstange. Unterstützt wird der Abbremsvorgang durch einen mittels Schraube einstellbaren Luftaustausch zwischen Deckel- und Zylinderraum. Der Nachteil für das HF Wegmesssystem besteht darin, dass die Bewegung des Kunststoffrings im Deckelraum die physikalischen Verhältnisse für den Sensor ändert und sich dadurch die Messgenauigkeit wesentlich verschlechtert. Die klassische Endlagendämpfung lässt sich auch bei der vorgeschlagenen Konfiguration realisieren. Der Kunststoffring sitzt im Deckel und die konische Verlängerung der Kolbenstange wird am Reflexionskörper realisiert. Der Vorteil dieser Lösung besteht darin, dass jetzt die Bewegung des Kunststoffrings durch den Becher maskiert wird, d.h. die Sensorsignale durch das Eintauchen der Antenne in den Becher durch die Bewegung des Kunststoffrings nicht mehr gestört werden. Eine ebenso vorteilhafte Ausführung wird erreicht wenn das Wirkschema umgedreht wird. Der bewegliche Kunststoffring wird jetzt auf der Außenfläche des Bechers montiert und die Deckeleintauchfläche konisch ausgeführt durch Einsetzen eines Kunststoffringes. Die Bewegung des Rings auf dem Reflexionskörper beeinflusst die elektromagnetische Welle nicht, da sich der Kunststoffring nicht mehr im Nahbereich der Antenne befindet.
Sämtliche Kunststoffteile in unmittelbarer Nähe der Monopolantenne müssen in einem Kunststoffmaterial mit geringer Wasseraufnahme wie z. B. PPS Gf 40 ausgeführt werden.

Das anmeldungsgemäße Verfahren soll nunmehr anhand eines Pneumatikzylinders wiedergegeben werden. Hierbei wird der gesamte Pneumatikzylinder zwischen Kolbenstange und rückwärtigem Deckel z. B. als Rundhohlleiter betrachtet. Entsprechend den geometrischen Abmessungen des Zylinders wird die Sendefrequenz des Sensors so gewählt, dass eine monomodige Ausbreitung der elektromagnetischen Welle (im Beispiel im E01-Mode) möglich ist und dass die Anregung von Hohlleiterwellenmoden höherer Ordnung verhindert wird. Die Anregung von Hohlleitermoden niedrigerer Ordnung wird durch die Geometrie der Einspeisung verhindert. Die Anregung der elektromagnetischen Welle im Zylinder erfolgt z.B. über einen Monopol in der vorgestellten Art und Weise. Entsprechend dem Reflektometerprinzip breitet sich die Welle in dem Rundhohlleiter (=Pneumatikzylinder) aus und wird am Kolben (=Kurzschluss) reflektiert. Um die Entfernung zwischen Kolben und Koppelsonde kontinuierlich messen zu können, muss das Sendesignal moduliert werden. Dies kann in Form einer Frequenzmodulation erfolgen. Um hierbei eine hohe Entfernungsauflösung zu erzielen ist jedoch ein großer Frequenzhub erforderlich. In der Praxis vorteilhafter ist das Aussenden eines CW Signals, z. B. bei drei unterschiedlichen Frequenzen (Beispiel: 5.8 GHz, 6.0 GHz, 6.2 GHz) zur Festlegung eines eindeutigen Entfernungsbereiches mit jeweils anschließender Auswertung der Phasendifferenz zwischen Sende- und Empfangssignal als hochgenauen Messwert für die Entfernung zwischen Koppelsonde und Kolben. Die Zahl der zu verwendenden Frequenzen sowie deren Lage ist in erster Linie abhängig vom maximal zu messenden Abstand sowie von der notwendigen Fehlertoleranz gegenüber der Phasenwinkelmessung. Generell ist bei kleiner Frequenzdifferenz zwischen zwei Messfrequenzen der maximal messbare Abstand größer, allerdings bedingt die Unterscheidung zweier aufeinander folgender Perioden eine höhere Genauigkeit der Phasenwinkelmessung als bei größerer Frequenzdifferenz. Die Störsicherheit ist deshalb bei größeren Differenzen zwischen den einzelnen Messfrequenzen höher.

Soll ein großer Messbereich mit ausreichender Störsicherheit gemessen werden, so sind mehrere Messfrequenzen mit geeigneter Frequenzlage notwendig. Dadurch sind dann Frequenzpaare sowohl mit kleiner Differenz der Sendefrequenz (großer Messbereich) als auch mit großer Frequenzdifferenz (Störsicherheit) erforderlich.

Die Positionsgenauigkeit ist im wesentlichen bestimmt durch die Genauigkeit der Phasenwinkelmessung bei der höchsten Messfrequenz, weil dort die Wellenlänge am kleinsten ist. Es gilt die Formel:

$$\text{Wegänderung} = \text{Phasenwinkeländerung} \times \text{Wellenlänge} / 180°$$

Die Kolbenpositionsmessung mittels Mikrowelle beruht auf dem folgenden Prinzip: Eine elektromagnetische Welle geeigneter Frequenz wird in den Zylinder eingekoppelt. Der Zylinder selbst fungiert als Leitungsstruktur für die Welle. Die Welle läuft im Zylinder bis zum Kolben als Reflexionskörper. Am Kolben wird die elektromagnetische Welle größtenteils reflektiert, da sich der Kolben elektrisch ähnlich einem Kurzschluss verhält. Die reflektierte Welle läuft den Zylinder zurück und wird über die selbe Struktur, über die auch die Einkopplung erfolgte, wieder aus dem Zylinder ausgekoppelt. Der Phasenwinkel zwischen dem eingekoppelten und dem reflektierten Signal wird gemessen. Ändert der Kolben seine Position, so ändert sich die Strecke, welche die elektromagnetische Welle im Zylinder zurücklegt. Durch die Streckenänderung kommt es zu einer Änderung der Signallaufzeit und damit auch zu einem anderen Phasenwinkel zwischen hinlaufender und reflektierter Welle. Deshalb kann die Phase zwischen hin- und rücklaufendem Signal als Maß für die Kolbenposition verwendet werden. Es ergibt sich folgender Zusammenhang zwischen Kolbenposition und Phasenwinkel $\varphi$:

$$\varphi = \frac{2x \times 360°}{\lambda} + \varphi_0$$

$\varphi_0$ ist dabei ein Phasenoffset, der hauptsächlich durch die Zuleitung und die Einkopplung bestimmt wird. Er ist konstant und hat daher auf die eigentliche Positionsmessung keinen Einfluss. Aus obiger Gleichung ergibt sich auch die notwendige Phasenmessgenauigkeit um eine vorgegebene Positionsmessgenauigkeit erreichen zu können.

Da bei einer Phasenmessung grundsätzlich nicht zwischen einem Phasenwinkel $\varphi$ und $\varphi+n*360°$ unterschieden werden kann, könnten bei der Verwendung von nur einer Frequenz nur Zylinder bis zu einem maximalen Kolbenhub $<\lambda/2$ vermessen werden. Bei Verwendung von zwei oder mehr Frequenzen ist es jedoch möglich, Kolben mit wesentlich größerer Länge zu vermessen. Bei zwei Frequenzen dürfen sich die beiden Wellenlängen nicht zu stark unterscheiden. Für einen Zylinder der Länge I gilt für die Wellenlängen:

$$\lambda_1 > \lambda_2 > \frac{2l\lambda_1}{2l + \lambda_1}$$

Da der Phasenwinkel des reflektierten Signals nicht direkt gemessen werden kann und somit die an einem Mischerausgang gemessene Spannung nicht direkt proportional der Kolbenposition ist, wird für die Positionssuche ein geeigneter Algorithmus benötigt. Da sich das Ausgangssignal periodisch wiederholt, muss vor allem sichergestellt sein, dass die Positionssuche eindeutig verläuft, d.h. es muss eindeutig bestimmbar sein in welcher Periode sich der Kolben befindet. Eine Möglichkeit der Positionsbestimmung wäre die Aufnahme vieler Messwerte während eines Frequenzsweeps. Diese Messwerte werden dann mittels einer FFT oder DFT in den Frequenzbereich transformiert. Aus der Position des Maximums des entstehenden Spektrums lässt sich dann die Position des Kolbens bestimmen. Solange man bei der Aufnahme der Messwerte keine Unterabtastung zulässt, können bei diesem Verfahren keine Mehrdeutigkeitsprobleme auftreten. Auch erhält man durch dieses Verfahren bereits ohne die Aufnahme einer Positionstabelle Werte für die Kolbenpositionen. Nachteilig ist die Tatsache, dass zum einen eine relativ große Zahl von Messpunkten aufgenommen werden muss und dass der Rechenaufwand relativ groß ist.

Eine andere Möglichkeit ist, nur bei wenigen Frequenzen zu messen und die Kolbenposition anhand von Positionstabellen zu bestimmen. Dabei werden einfach die gemessenen Werte mit den Werten der Punkte der Positionstabelle verglichen. Die ermittelte Position entspricht dann dem Tabellenwert, der den Messwerten am ähnlichsten ist. Nachteilig an diesem Verfahren ist, dass es eventuell zu Mehrdeutigkeiten kommen kann. Da eine direkte Phasenmessung nicht durchgeführt wird, kann die Eindeutigkeit nicht durch Einhalten der oben dargestellten Bedingung sichergestellt werden. Genauere Untersuchungen zeigen, dass es bei der Verwendung von nur zwei Messfrequenzen immer Punkte mit identischen Messwerten gibt, wenn der Zylinder länger als $\lambda/2$ ist. Da dies in der Praxis meist der Fall ist, sollte mit mindestens drei Frequenzen gearbeitet werden. Werden die drei Messfrequenzen geschickt gewählt, so gibt es dann keine Positionen mehr, bei denen alle drei Messwerte identisch sind. Allerdings müssen sich in der Praxis die Messwerte an zwei Kolbenpositionen um einen Mindestbetrag unterscheiden, um die Eindeutigkeit auch noch bei gewissen Messfehlern sicherstellen zu können. Daher kann insbesondere bei größeren Zylinderlängen die Nutzung von mehr als drei Frequenzen vorteilhaft sein. Außerdem wird dadurch auch die Messgenauigkeit erhöht, da Rauschen oder Messfehler, die nur bei einer Frequenz auftreten, unterdrückt werden.

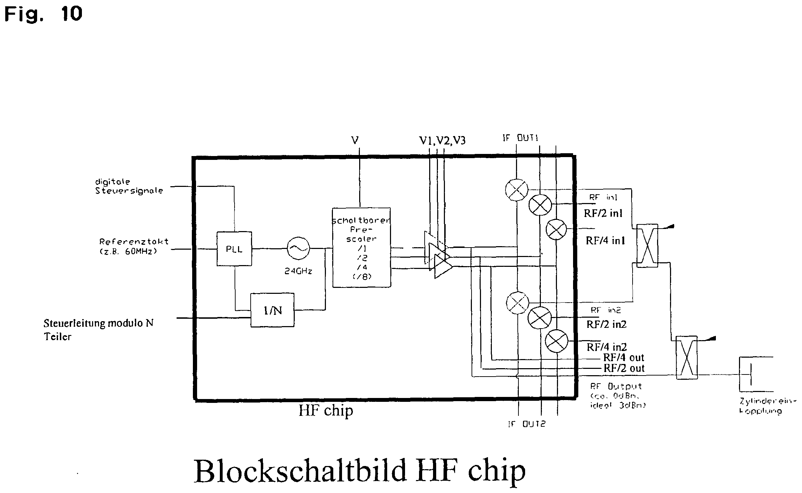

Die Sende- Empfangssignale werden in einer entsprechenden HF- Elektronik erzeugt. Dazu wird der Koax-Leiter (= Stift des Monopols) über eine Löt-, Steck oder Bondverbindung mit der Leiterplatte, die die HF-Elektronik trägt, verbunden. Die HF-Elektronik wird als single chip substrat, z.B. in Silizium Germanium ausgeführt. Die Komponenten, die dabei realisiert werden, zeigt Blockschaltbild HF chip gemäß Fig. 10. Ein Oszillator (VCO=Voltage controlled oscillator) erzeugt das Hochfrequenzsignal, z. B. bei 24 GHz. Der Oszillator wird über eine Regelschleife in der Frequenz stabilisiert. Hierzu wird das Oszillatorausgangssignal in der Frequenz geteilt, z. B. um Faktor 16 und über eine PLL quarzgenau nachgeregelt. Im Sendezweig befindet sich dann ein schaltbarer Teiler, welcher über das Teilerverhältnis die endgültige Sendefrequenz festlegt. So kann diese bei einer Oszillatorfrequenz von 24 GHz bei 12, 6, 3,...GHz liegen. Entsprechend dem gewählten Teilerverhältnis wird durch externe Beschaltung der frequenzmäßig dazugehörige Leistungsverstärker aktiviert. Anschließend wird das Signal über die Monopolantenne abgestrahlt. Nachdem die elektromagnetische Welle am Reflexionskörper reflektiert wurde, wird sie über die Monopolantenne empfangen und über zwei Richtkoppler an den Empfänger weitergeleitet. Der Empfänger ist als IQ-Empfänger realisiert. Entsprechend der eingestellten Frequenz werden die Zwischenfrequenzen des Empfängers (IF out) analog/digital gewandelt und in einen FPGA (free programmable gate array) ausgewertet. Als Ergebnis erhält man den Entfernungswert zwischen Sensor und Kolben. Dieser wird entweder analog z. B. über eine 0 bis 20 mA oder 0 bis 10V Schnittstelle oder digital, z. B. CAN-Bus, an eine SPS weitergegeben. Im FPGA sind dabei die Funktionsblöcke DSP (digitaler Signalprozessor), Teile des Interface, Speicher und Teile der PLL Ansteuerung realisiert.

Grundsätzlich ist hervorzuheben, dass das Prinzip der Endlagendämpfung umgedreht realisierbar ist, und zwar im Sinne einer kinematischen Umkehr; d. h. der bewegliche Kunststoffring sich im Deckel und der konisch zulaufende Kunststoffzapfen auf der Außenfläche des Bechers befindlich ist.

## Patentansprüche

1. Abstandsmessvorrichtung mit einer Auswerteelektronik und einer Sensoreinrichtung, die zumindest eine Koppelsonde zur Einspeisung eines Sendesignals in eine Leitungsstruktur mit Reflexionskörper aufweist, wobei die Messung des Abstandes zwischen dem von der Koppelsonde definierten Einspeisepunkt und dem Reflexionskörper erfolgt, wobei der Reflexionskörper eine Grundplatte mit aufgesetztem Kragen zur Ausbildung eines becherförmigen Elements aufweist, wobei der aufgesetzte Kragen die Koppelsonde in einer Endstellung des Reflexionskörpers umfasst, **dadurch gekennzeichnet, dass** der aufgesetzte Kragen mit einer Kunststofflamelle ausgestattet ist.

2. Abstandsmessvorrichtung nach Anspruch 1, wobei in der Grundplatte eine Stirnfläche mit Rillenstruktur vorgesehen ist.

3. Abstandsmessvorrichtung nach einem der Ansprüche 1 oder 2, wobei in der Grundplatte eine Stirnfläche mit Rillenstruktur vorgesehen ist, die in Umfangsrichtung verläuft.

4. Abstandsmessvorrichtung nach Anspruch 3, wobei die Rillenstruktur mindestens zwei Rillen aufweist, vorzugsweise 3 oder mehr Rillen aufweist.

5. Abstandsmessvorrichtung nach Anspruch 4, wobei die Rillen mit dielektrischem Material gefüllt sind.

6. Abstandsmessvorrichtung nach einem der Ansprüche 1 bis 5, wobei zur Bereitstellung einer Endlagendämpfung ein Ringelement, vorzugsweise Kunststoffring, vorgesehen ist, welches den Kragen in der Endstellung umfasst.

7. Abstandsmessvorrichtung nach einem der Ansprüche 1 bis 5, wobei zur Bereitstellung einer Endlagendämpfung ein Ringelement, vorzugsweise Kunststoffring, vorgesehen ist, welches an der Außenoberfläche des Kragens vorgesehen ist und eine zu der Außenoberfläche des Kragens entsprechende Flächenpaarung hat, die vorzugsweise konisch verläuft.

8. Abstandsmessvorrichtung nach einem der Ansprüche 1 bis 7, wobei die Leitungsstruktur einen Einspeiseblock mit einem Einspeisungsbereich aufweist, der einem HF-Transceiver über einen Wellenleiter mit dielektrischem Haltesystem mit der Koppelsonde verbindet.

9. Abstandsmessvorrichtung nach Anspruch 8, wobei das dielektrische Haltesystem aus einem Material mit geringer Wasseraufnahme bzw. Abgabe besteht und sowohl massiv als auch in einzelnen Stützen bei Zylindern mit großem Durchmesser ausgeführt werden kann.

10. Abstandsmessvorrichtung nach einem der Ansprüche 1 bis 9, wobei die Leitungsstruktur ein Rundhohlleiter, vorzugsweise ein Zylinder mit Kolben als Reflexionskörper, ist.

11. Abstandsmessvorrichtung nach Anspruch 10, wobei der Reflexionskörper auf den Kolben aufgesetzt ist.

12. Abstandsmessvorrichtung nach einem der Ansprüche 1 bis 11, wobei ein pneumatischer Druckausgleich vorgesehen ist.

13. Abstandsmessvorrichtung nach einem der Ansprüche 8 bis 12, wobei der Einspeisungsblock Bohrungen aufweist, in die das Haltesystem, die Koppelsonde und der koaxiale Einspeisungsbereich einbringbar sind.

14. Abstandsmessvorrichtung nach einem der Ansprüche 1 bis 13, wobei die Koppelsonde als Monopol-Anregungssystem ausgelegt ist, und die Einspeisung der elektromagnetischen Welle koaxial erfolgt und über eine mehrstufige koaxiale Transformationsstufe auf dem Monopol konvertiert wird.

15. Abstandsmessvorrichtung nach einem der Ansprüche 1 bis 14, wobei die Koppelsonde als ein dreistufiges Transformationsmodul ausgelegt ist, das eine plane Grundfläche aufweist, auf der mittig ein Zylinder vorgesehen ist, an den sich ein Stift anschließt, über den der Einspeisungsbereich mit der Koppelsonde verbunden ist.

16. Abstandsmessvorrichtung nach Anspruch 15, wobei die Koppelsonde von einem Kunststoff überzogen ist, vorzugsweise ein Kunststoff mit geringer Wasseraufnahme und Wasserabgabe, z.B. PPS Gf 40.

17. Abstandsmessvorrichtung nach einem der Ansprüche 1 bis 16, wobei über die Koppelsonde das Sendesignal als eine elektromagnetische Welle im Hochfrequenzbereich eingespeist wird.

18. Abstandsmessvorrichtung nach Anspruch 17, wobei die elektromagnetische Welle im Hochfrequenzbereich zwischen 100 MHz bis 25 GHz eingespeist wird.

19. Abstandsmessvorrichtung nach einem der Ansprüche 1 bis 18, wobei über die Koppelsonde mindestens zwei Sendesignale als elektromagnetische Wellen mit unterschiedlicher Frequenz ausgestrahlt werden.

20. Abstandsmessvorrichtung nach einem der Ansprüche 18 oder 19, wobei die eingekoppelte elektromagnetische Welle eine monomodige Ausbreitung aufweist, und zwar vorzugsweise im TEM-Mode bei koaxialer Struktur.

21. Abstandsmessvorrichtung nach einem der Ansprüche 17 bis 20, wobei die eingekoppelte elektromagnetische Welle eine monomodige Ausbreitung aufweist, und zwar vorzugsweise im E01-Mode beim Rundhohlleiter,

22. Abstandsmessvorrichtung nach einem der Ansprüche 1 bis 21, wobei die Sensoreinrichtung eine Hochfrequenz-Elektronik mit einem Sende- und Empfangszweig aufweist.

23. Abstandsmessvorrichtung nach einem der Ansprüche 1 bis 22, wobei die Auswerteelektronik und/oder die Sensoreinrichtung, vorzugsweise als Interfaceelektronik, in einer Chipanordnung vorgesehen ist, die vorzugsweise am Einspeiseblock vorgesehen ist.

24. Abstandsmessvorrichtung nach einem der Ansprüche 22 oder 23, wobei die Hochfrequenzelektronik bestehend aus PLL, Oszillator (VCO), Mischer, Frequenzverteilern und Verstärkern auf einem gemeinsamen Substrat (single chip Lösung) integriert sind.

25. Abstandsmessvorrichtung nach Anspruch 24, wobei es sich bei dem Substratmaterial um Silizium-Germanium, Silizium, Silizium-Germanium-Karbid oder Silizium-Karbid handelt.

26. Abstandsmessvorrichtung nach Ansprüchen 22 bis 25, **dadurch gekennzeichnet, dass** die Sende- und Empfangsfrequenz der Chipanordnung durch Einstellen des Teilerverhältnisses beispielsweise durch Anlegen einer externen Spannung, in diskreten Schritten, vorzugsweise in 2-er Schritten wählbar ist.

27. Abstandsmessvorrichtung nach einem der Ansprüche 1 bis 26, wobei die Auswerteelektronik bestehend aus DSP, PLL, Speicher als FPGA (free programmable gate array) realisiert ist.

28. Abstandsmessvorrichtung nach Anspruch 27, wobei die Auswerteelektronik als Interfaceelektronik sowohl analog z. B. 0 bis 20mA, 0 bis 10V als auch digital, z. B. als CAN-Bus realisiert ist und Teile des FPGA belegt zur Erzeugung des Interfaceprotokolls bzw. Ansteuerung des Digital/Analogwandels.

29. Verfahren zur Bestimmung eines Abstandes unter Verwendung einer Abstandsmessvorrichtung nach einem der Ansprüche 1 bis 28, welches die Schritte aufweist:

a. Bereitstellen einer Leitungsstruktur mit Reflexionskörper, die einen Einspeisungsblock mit einem Einspeisungsbereich aufweist, der einen HF-Transceiver über einen Wellenleiter mit dielektrischem Haltesystem mit einer Koppelsonde verbindet, und der Reflexionskörper eine Grundplatte mit aufgesetztem Kragen zur Ausbildung eines becherförmigen Elements aufweist, welches als Endstück am Reflexionskörper montierbar ist, sowie der aufgesetzte Kragen die Koppelsonde in einer Endstellung des Reflexionskörpers umfasst und der aufgesetzte Kragen mit einer Kunststofflamelle ausgestattet ist.

b. Messen des Abstandes zwischen dem von der Koppelsonde definierten Einspeisepunkt und dem Reflexionskörper, wobei mindestens zwei Sendesignale als elektromagnetische Wellen mit unterschiedlicher Frequenz über die Koppelsonde eingekoppelt, vorzugsweise ausgestrahlt und empfangen, werden.

30. Verfahren nach Anspruch 29, wobei das Messen des Abstandes durch eine jeweilige Auswertung der Phasendifferenz zwischen dem Sendesignal und dem Empfangssignal der elektromagnetischen Welle erfolgt.

31. Verfahren nach einem der Ansprüche 29 oder 30, wobei die Differenz bei mindestens zwei Sendefrequenzen der jeweiligen elektromagnetischen Welle klein, vorzugsweise 1% des Absolutwertes, ist, um einen großen Messbereich abzudecken.

32. Verfahren nach einem der Ansprüche 29 oder 30, wobei die Differenz in den Frequenzen des Sendesignals der jeweiligen elektromagnetischen Welle groß, vorzugsweise 20 des Absolutwertes, ist, um eine große Störsicherheit zu erzielen.

33. Verfahren nach einem der Ansprüche 29 bis 32, wobei die Sendesignale kontinuierlich ausgestrahlt werden.

34. Verfahren nach einem der Ansprüche 29 bis 32, wobei drei Sendesignale als elektromagnetische Wellen über die Koppelsonde ausgestrahlt werden.

**Claims**

1. Distance measuring device comprising evaluation electronics and a sensor unit, which has at least one coupling probe for feeding a transmission signal into a conducting structure with a reflective body, wherein the measurement of the distance takes place between the feeding-in point, defined by the coupling probe, and the reflection body, wherein the reflection body has a base plate with an attached collar for forming a cup-shaped element, wherein the attached collar encloses the coupling probe in an end position of the reflection body, **characterized in that** the attached collar is provided with a plastic fin.

2. Distance measuring device according to Claim 1, wherein an end face with a groove structure is provided in the base plate.

3. Distance measuring device according to either of Claims 1 and 2, wherein an end face with a groove structure which extends in the circumferential direction is provided in the base plate.

4. Distance measuring device according to Claim 3, wherein the groove structure has at least two grooves, preferably has 3 or more grooves.

5. Distance measuring device according to Claim 4, wherein the grooves are filled with dielectric material.

6. Distance measuring device according to one of Claims 1 to 5, wherein a ring element, preferably a plastic ring, which encloses the collar in the end position, is provided for providing end position damping.

7. Distance measuring device according to one of Claims 1 to 5, wherein a ring element, preferably a plastic ring, which is provided on the outer surface of the collar and has a preferably conically extending surface pairing corresponding to the outer surface of the collar, is provided for providing end position damping.

8. Distance measuring device according to one of Claims 1 to 7, wherein the conducting structure has a feeding-in block with a feeding-in region, which connects an HF transceiver to the coupling probe by means of a waveguide with a dielectric restraint system.

9. Distance measuring device according to Claim 8, wherein the dielectric restraint system consists of a material with low water absorption and release and can be configured both solidly and in individual supports in the case of cylinders with a large diameter.

10. Distance measuring device according to one of Claims 1 to 9, wherein the conducting structure is a round hollow conductor, preferably a cylinder with a piston as a reflection body.

11. Distance measuring device according to Claim 10, wherein the reflection body is attached to the piston.

12. Distance measuring device according to one of Claims 1 to 11, wherein a pneumatic pressure equalization is provided.

13. Distance measuring device according to one of Claims 8 to 12, wherein the feeding-in block has bores into which the restraint system, the coupling probe and the coaxial feeding-in region can be introduced.

14. Distance measuring device according to one of Claims 1 to 13, wherein the coupling probe is designed as a monopole excitation system, and the feeding-in of the electromagnetic wave takes place coaxially and is converted by means of a multistage coaxial transformation stage on the monopole.

15. Distance measuring device according to one of Claims 1 to 14, wherein the coupling probe is designed as a three-stage transformation module, which has a planar base area, provided centrally on which is a cylinder adjoined by a pin, by means of which the feeding-in region is connected to the coupling probe.

16. Distance measuring device according to Claim 15, wherein the coupling probe is covered by a plastic, preferably a plastic with low water absorption and water release, for example PPS Gf 40.

17. Distance measuring device according to one of Claims 1 to 16, wherein the transmission signal is fed in by means of the coupling probe as an electromagnetic wave in the high frequency range.

18. Distance measuring device according to Claim 17, wherein the electromagnetic wave is fed in in the high frequency range between 100 MHz and 25 GHz.

19. Distance measuring device according to one of Claims 1 to 18, wherein at least two transmission signals are emitted as electromagnetic waves at different frequencies by means of the coupling probe.

20. Distance measuring device according to either of Claims 18 and 19, wherein the coupled-in electromagnetic wave has monomode propagation, to be precise preferably in the TEM mode in the case of a coaxial structure.

21. Distance measuring device according to one of Claims 17 to 20, wherein the coupled-in electromagnetic wave has monomode propagation, to be precise preferably in the E01 mode in the case of a round hollow conductor.

22. Distance measuring device according to one of Claims 1 to 21, wherein the sensor unit has high frequency electronics with a transmission and reception branch.

23. Distance measuring device according to one of Claims 1 to 22, wherein the evaluation electronics and/or the sensor unit is/are provided, preferably as interface electronics, in a chip arrangement, which is preferably provided on the feeding-in block.

24. Distance measuring device according to either of Claims 22 and 23, wherein the high-frequency electronics consisting of a PLL, oscillator (VCO), mixer, frequency distributors and amplifiers are integrated on a common substrate (single chip solution).

25. Distance measuring device according to Claim 24, wherein the substrate material is silicon-germanium, silicon, silicon-germanium carbide or silicon carbide.

26. Distance measuring device according to Claims 22 to 25, **characterized in that** the transmission and reception frequency of the chip arrangement can be chosen by setting the divider ratio, for example by applying an external voltage, in discrete steps, preferably in steps of 2.

27. Distance measuring device according to one of Claims 1 to 26, wherein the evaluation electronics consisting of a DSP, PLL and memory is realized as an FPGA (free programmable gate array).

28. Distance measuring device according to Claim 27, wherein the evaluation electronics are realized as interface electronics both in an analogue form, for example 0 to 20 mA, 0 to 10 V, and in a digital form, for example as a CAN bus, and occupies parts of the FPGA for generating the interface protocol or activating the digital/analogue conversion.

29. Method for determining a distance by using a distance measuring device according to one of Claims 1 to 28, which comprises the steps of:

> a. providing a conducting structure with a reflection body, which has a feeding-in block with a feeding-in region, which connects an HF transceiver to a coupling probe by means of a waveguide with a dielectric restraint system, and the reflection body has a base plate with an attached collar for forming a cup-shaped element, which can be mounted as an end piece on the reflection body, and the attached collar encloses the coupling probe in an end position of the reflection body and the attached collar is provided with a plastic fin;
> b. measuring the distance between the feeding-in point, defined by the coupling probe, and the reflection body, wherein at least two transmission signals are coupled in, preferably emitted and received, as electromagnetic waves at different frequencies by means of the coupling probe.

30. Method according to Claim 29, wherein the measuring of the distance takes place by a respective evaluation of the phase difference between the transmission signal and the reception signal of the electromagnetic wave.

31. Method according to either of Claims 29 and 30, wherein the difference in the case of at least two transmission frequencies of the respective electromagnetic wave is small, preferably 1% of the absolute value, in order to cover a large measuring range.

32. Method according to either of Claims 29 and 30, wherein the difference in the frequencies of the transmission signal of the respective electromagnetic wave is great, preferably 20 of the absolute value, in order to achieve a great interference immunity.

33. Method according to one of Claims 29 to 32, wherein the transmission signals are emitted continuously.

34. Method according to one of Claims 29 to 32, wherein three transmission signals are emitted as electromagnetic waves by means of the coupling probe.

**Revendications**

1. Dispositif de mesure de distance comportant une électronique d'évaluation et un dispositif capteur qui comporte au moins une sonde de couplage pour l'injection d'un signal d'émission dans une structure de guidage pourvue d'un corps réfléchissant, dans lequel la mesure de la distance entre le point d'injection défini par la sonde de couplage et le corps réfléchissant est effectuée, dans lequel le corps réfléchissant présente une plaque de base à collet rapporté pour former un élément en forme de godet, dans lequel le collet rapporté comprend la sonde de couplage à une position d'extrémité du corps réfléchissant, **caractérisé en ce que** le collet rapporté est pourvu d'une lamelle en matière plastique.

2. Dispositif de mesure de distance selon la revendication 1, dans lequel une face frontale présentant une structure rainurée est prévue dans la plaque de base.

3. Dispositif de mesure de distance selon l'une des revendications 1 ou 2, dans lequel la plaque de base comporte une face frontale présentant une structure rainurée s'étendant dans la direction circonférentielle.

4. Dispositif de mesure de distance selon la revendication 3, dans lequel la structure rainurée présente au moins deux rainures, de préférence 3 rainures ou plus.

5. Dispositif de mesure de distance selon la revendication 4, dans lequel les rainures sont remplies d'un matériau diélectrique.

6. Dispositif de mesure de distance selon l'une des revendications 1 à 5, dans lequel il est prévu un élément annulaire, de préférence un anneau en matière plastique, comprenant le collet en position d'extrémité pour assurer un amortissement de fin de course.

7. Dispositif de mesure de distance selon l'une des revendications 1 à 5, dans lequel il est prévu un élément annulaire, de préférence un anneau en matière plastique, qui est prévu sur la surface extérieure du collet et qui présente une paire de surfaces correspondant à la surface extérieure du collet, qui s'étendent de préférence de manière conique, pour assurer un amortissement de fin de course.

8. Dispositif de mesure de distance selon l'une des revendications 1 à 7, dans lequel la structure de guidage présente un bloc d'injection comportant une zone d'injection reliant un émetteur-récepteur HF à la sonde de couplage par l'intermédiaire d'un guide d'ondes pourvu d'un système de support diélectrique.

9. Dispositif de mesure de distance selon la revendication 8, dans lequel le système de support diélectrique est constitué d'un matériau à faible absorption ou à faible libération d'eau et peut être réalisé à la fois sous forme solide et dans des supports individuels pour des cylindres de grand diamètre.

10. Dispositif de mesure de distance selon l'une des revendications 1 à 9, dans lequel la structure de guidage est un guide d'ondes circulaire, de préférence un cylindre comportant un piston en tant que corps réfléchissant.

11. Dispositif de mesure de distance selon la revendication 10, dans lequel le corps réfléchissant est placé sur le piston.

12. Dispositif de mesure de distance selon l'une des revendications 1 à 11, dans lequel il est prévu une compensation de pression pneumatique.

13. Dispositif de mesure de distance selon l'une des revendications 8 à 12, dans lequel le bloc d'injection comporte des alésages dans lesquels peuvent être introduits le système de support, la sonde de couplage et la zone d'injection coaxiale.

14. Dispositif de mesure de distance selon l'une des revendications 1 à 13, dans lequel la sonde de couplage est configurée sous la forme d'un système d'excitation à monopôle, et dans lequel l'injection de l'onde électromagnétique est effectuée coaxialement et est convertie en monopôle par l'intermédiaire d'un étage de transformation coaxial à plusieurs étages.

15. Dispositif de mesure de distance selon l'une des revendications 1 à 14, dans lequel la sonde de couplage est réalisée sous la forme d'un module de transformation à trois étages comportant une surface de base plane sur laquelle est prévu de manière centrale un cylindre auquel est reliée une broche, par l'intermédiaire de laquelle la zone d'injection est reliée à la sonde de couplage.

16. Dispositif de mesure de distance selon la revendication 15, dans lequel la sonde de couplage est revêtue d'une matière plastique, de préférence d'une matière plastique à faible absorption d'eau et à faible libération d'eau, par exemple du PPS Gf 40.

17. Dispositif de mesure de distance selon l'une des revendications 1 à 16, dans lequel le signal d'émission est injecté par l'intermédiaire de la sonde de couplage sous la forme d'une onde électromagnétique dans la plage des hautes fréquences.

18. Dispositif de mesure de distance selon la revendication 17, dans lequel l'onde électromagnétique est injectée dans la plage des hautes fréquences comprise entre 100 MHz et 25 GHz.

19. Dispositif de mesure de distance selon l'une des revendications 1 à 18, dans lequel au moins deux signaux d'émission sont émis par la sonde de couplage sous la forme d'ondes électromagnétiques présentant des fréquences différentes.

20. Dispositif de mesure de distance selon l'une des revendications 18 ou 19, dans lequel l'onde électromagnétique couplée en entrée présente un mode de propagation monomode, de préférence un mode TEM pour une structure coaxiale.

21. Dispositif de mesure de distance selon l'une des revendications 17 à 20, dans lequel l'onde électromagnétique couplée en entrée présente un mode de propagation monomode, de préférence un mode E01 pour un guide d'ondes circulaire.

22. Dispositif de mesure de distance selon l'une des revendications 1 à 21, dans lequel le dispositif capteur comprend une électronique haute fréquence comportant une branche d'émission et une branche de réception.

23. Dispositif de mesure de distance selon l'une des revendications 1 à 22, dans lequel l'électronique d'évaluation et/ou le dispositif capteur sont prévus, de préférence en tant qu'électronique d'interface, dans un système à puce qui est de préférence prévu sur le bloc d'alimentation.

24. Dispositif de mesure de distance selon l'une des revendications 22 ou 23, dans lequel l'électronique haute fréquence, constituée de PLL, d'oscillateurs (VCO), de mélangeurs, de répartiteurs de fréquence et d'amplificateurs, est intégrée sur un substrat commun (solution à puce unique).

25. Dispositif de mesure de distance selon la revendication 24, dans lequel le matériau du substrat est le silicium-germanium, le silicium, le carbure de silicium-germanium ou le carbure de silicium.

26. Dispositif de mesure de distance selon les revendications 22 à 25, **caractérisé en ce que** la fréquence d'émission et de réception du dispositif à puce peut être sélectionnée en réglant le rapport de division, par exemple en appliquant une tension externe, par pas discrets, de préférence par pas de 2.

27. Dispositif de mesure de distance selon l'une des revendications 1 à 26, dans lequel l'électronique d'évaluation constituée de DSP, de PLL, de mémoires, est réalisée sous la forme d'un FPGA (réseau de portes librement programmable).

28. Dispositif de mesure de distance selon la revendication 27, dans lequel l'électronique d'évaluation est réalisée sous la forme d'une électronique d'interface à la fois analogique, par exemple de 0 à 20 mA, de 0 à 10V, et numérique, par exemple sous la forme d'un bus CAN, et dans lequel des parties du FPGA sont utilisées pour générer le protocole d'interface ou pour commander la conversion numérique/analogique.

29. Procédé de détermination d'une distance à l'aide d'un dispositif de mesure de distance selon l'une des revendications 1 à 28, comprenant les étapes consistant à :

   a. prévoir une structure de guidage comportant un corps réfléchissant comprenant un bloc d'injection ayant une région d'injection reliant un émetteur-récepteur HF à une sonde de couplage par l'intermédiaire d'un guide d'ondes pourvu d'un système de support diélectrique, et le corps réfléchissant comportant une plaque de base à collet rapporté pour former un élément en forme de godet qui peut être monté comme pièce d'extrémité sur le corps réfléchissant, et le collet rapporté comprenant la sonde de couplage à une position d'extrémité du corps réfléchissant, et le collet rapporté étant pourvu d'une lamelle en matière plastique,
   b. mesurer la distance entre le point d'injection défini par la sonde de couplage et le corps réfléchissant, dans lequel au moins deux signaux d'émission sont couplés en entrée, de préférence émises et reçues, sous la forme d'ondes électromagnétiques présentant des fréquences différentes par l'intermédiaire de la sonde de couplage.

30. Procédé selon la revendication 29, dans lequel la distance est mesurée par une évaluation respective de la différence de phase entre le signal émis et le signal reçu de l'onde électromagnétique.

31. Procédé selon l'une des revendications 29 ou 30, dans lequel la différence est faible à au moins deux fréquences d'émission de l'onde électromagnétique respective, et est de préférence égale à 1% de la valeur absolue, afin de couvrir une large plage de mesure.

32. Procédé selon l'une des revendications 29 ou 30, dans lequel la différence entre les fréquences du signal d'émission de l'onde électromagnétique respective est élevée, de préférence 20 de la valeur absolue, afin d'obtenir une immunité élevée aux brouillages.

33. Procédé selon l'une des revendications 29 à 32, dans lequel les signaux d'émission sont émis en continu.

34. Procédé selon l'une des revendications 29 à 32, dans lequel trois signaux d'émission sont émis sous la forme d'ondes électromagnétiques par l'intermédiaire de la sonde de couplage.

Fig. 1

**Fig. 2**

# Bauteile

Optional:
Ein u. Auslasskanal für
Endlagendämpfung

Pneumatik Ein u. Auslass

Kragen

Grundplatte

Endlagendämpfung

Dielektrisches Haltesystem

2a

Dielektrische
Halteschrauben

Kolbenzusatz

Monopol Anregungssystem (mehrstufig);
Koppelsonde

Dichtung

2 Kolbenzusatz mit optionalen
Eigenschaften:

2a: Anschlagsicherung ohne
Endlagendämpfung und
elektrisches Ziel

2b

2b: Anschlagsicherung mit
Endlagendämpfung und
elektrischen Ziel

Rillenstruktur

2c: Anschlagsicherung mit
Endlagendämpfung und
ohne elektrisches Ziel

Kolben und Kolbenstange (Prinzip)

2c

EP 2 054 633 B1

Komponenten

Fig. 3

Komponenten

Fig. 4

Fig. 5

Komponenten

Fig. 6

Fig. 7

Komponenten

Fig. 8

**Fig. 9**

PTFE (PPS40)

Mikrowellen-Sensor

Elektronik I/F

Metall

Fig. 10

Blockschaltbild HF chip

Stand der Technik

Fig. 11

EP 2 054 633 B1

# Stand der Technik

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4901628 A
- DE 10205904

- WO 10205904 A